# EUROPEAN PATENT APPLICATION

(11) **EP 3 051 438 A1**
(43) Date of publication of application: **03.08.2016**
(21) Application number: 15305083.6
(22) Date of filing: 27.01.2015
(51) Int. Cl.: G06F 17/30

(54) **Method and device for transmission of web content**

(71) Applicant: ALCATEL LUCENT, 92100 Boulogne-Billancourt (FR)
(72) Inventor: Van Broeck, Sigurd, 2018 Antwerpen (BE); Bostoen, Tom, 2018 Antwerpen (BE)
(74) Representative: ALU Antw Patent Attorneys

(57) **Abstract**

Embodiments relate to a method for transmission of web content between at least one client device (2) and at least one origin server (4), executed by a content delivery device (3). The method comprises:
- receiving (S1), from a first client device (2), a request (RQ) for a markup document (8) in a markup language, wherein said markup document is not stored in said local cache (5),
- obtaining (S3, S4) said markup document (8) from a first origin server (4), and
- sending (S6) the obtained markup document (8) to the first client device (2), wherein obtaining said markup document (8) triggers:
- obtaining (S7, S8, S9) a script document (9) containing a script, wherein the script comprises instructions in a scripting language, said script document having a first content type,
- determining (S10) the content type of the received second document, and
- in response to the determination that the content type of the script document (9) is said first content type, installing (S11) and running (S12) said script.

## Description

### FIELD OF THE INVENTION

The present invention relates to the field of telecommunications. In particular, the present invention relates to methods and devices for transmission of web content.

### BACKGROUND

A large part of the web content available on the Internet is distributed through a Content Delivery Network (CDN). When a client requests a web content asset available at an origin server, the request is directed to a CDN server wherein content is cached. If the requested content asset is available at the CDN server, the CDN server may respond directly without the need to contact the origin server or another CDN server.

A CDN can not only handle static content but also dynamic content by means of rules systems or dedicated markup languages like Edge Side Includes (ESI). Using such means, a Web application developer is able to create a dynamic Web resource in a Content Delivery Server, closer to and for delivery to the user, by inserting user-specific data in one or more static Web resources. For instance, the developer can manipulate the user's cookie such that the Web resource remains identical for multiple users. The rule system and dedicated markup language solutions are however restricted to the capabilities that the CDN manufacturer provides. With other words, the logic to execute is already provided by de CDN provider. The Web developer can only instruct the Content Delivery Server to execute the CDN logic but he cannot change the logic, nor can he add new logic to the system.

Some Content Delivery Networks provide support for a programming language. Such programming languages provide more fine-grained control over the caching operations of the Content Delivery Server. These solutions can be more powerful than a rule system or markup language but are restricted to usage by a service provider, and are typically Web application agnostic.

Edge computing pushes applications, data, and services away from origin server to the logical extremes, edges, of a network. This method allows Web developers to install a program on the edge node that will typically perform part of the functionality that would normally be performed by the origin server. Since that part of the functionality is executed closer to the user on the edge, the latency decreases. However, the Web developer has to install the edge application on the Content Delivery Server though an administration interface. Moreover, he has to effectively redesign the applications, data, and/or services running on the centralized nodes into a typically smaller central part and a new distributed part that will then run on the edge nodes.

### SUMMARY

It is thus an object of embodiments of the present invention to propose methods and devices for transmission of web content, which do not show the inherent shortcomings of the prior art.

Accordingly, embodiments relate to a method for transmission of web content between at least one client device and at least one origin server, executed by a content delivery device configured for:
- receiving, from the at least one client device, requests for content available at said at least one origin server,
- obtaining the requested content from a local cache or from the at least one origin server, and
- sending the obtained content to the at least one client device,
   wherein the method comprises:
- receiving, from a first client device, a request for a markup document in a markup language, wherein said markup document is not stored in said local cache,
- obtaining said markup document from a first origin server, and
- sending the obtained markup document to the first client device,
   wherein obtaining said markup document triggers:
- obtaining a script document containing a script, wherein the script comprises instructions in a scripting language, said script document having a first content type,
- determining the content type of the received script document, and
- in response to the determination that the content type of the script document is said first content type, installing and running said script.

Correspondingly, embodiments relate to a content delivery device for transmission of web content between at least one client device and at least one origin server, configured for:
- receiving, from the at least one client device, requests for content available at said at least one origin server,
- obtaining the requested content from a local cache or from the at least one origin server, and
- sending the obtained content to the at least one client device,
   wherein the content delivery device comprises:
- means for receiving, from a first client device, a request for a markup document in a markup language, wherein said markup document is not stored in said local cache,
- means for obtaining said markup document from a first origin server,
- means for sending the obtained markup document to the first client device,
- means for obtaining a script document containing a script, wherein the script comprises instructions in a scripting language, said script document having a first content type,
- means for determining the content type of the received script document, and
- means for installing and running said script, in response to the determination that the content type of the script document is said first content type.

The scripting language may be for example Ecmascript or Javascript.

The method may comprise, after obtaining the markup document:
- scanning the markup document for reference to the script document, and
- in response to detecting said reference, sending, to the origin server, a request for the script document.

In an embodiment, the method comprises:
- determining an URL of the script document in function of the request for the markup document, and
- requesting the script document based on the determined URL.

In an embodiment, the method comprises:
- determining an URL of the script document in function of data comprised in an HTTP header of a response from the origin server, and
- requesting the script document based on the determined URL.

Installing the script may comprise providing an isolated execution environment and a Document Object Model allowing interaction with the content delivery device.

Running the script may comprise prefetching content from the origin server and storing the prefetched content in the local cache.

Running the script may comprise pushing content to the client device.

In an embodiment, running the script comprises modifying content in function of user data or client device characteristics.

In an embodiment, running the script comprises storing user data and/or application data in a local database.

In an embodiment, running the script comprises selecting content to transfer to the client device in function of user data and/or client device characteristics.

Embodiments also relate to a computer program comprising instructions for performing the method mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of web content,
Figure 2 is an interaction diagram for the system of Figure 1, and
Figure 3 is a structural view of a device of the system of Figure 1.

### DESCRIPTION OF EMBODIMENTS

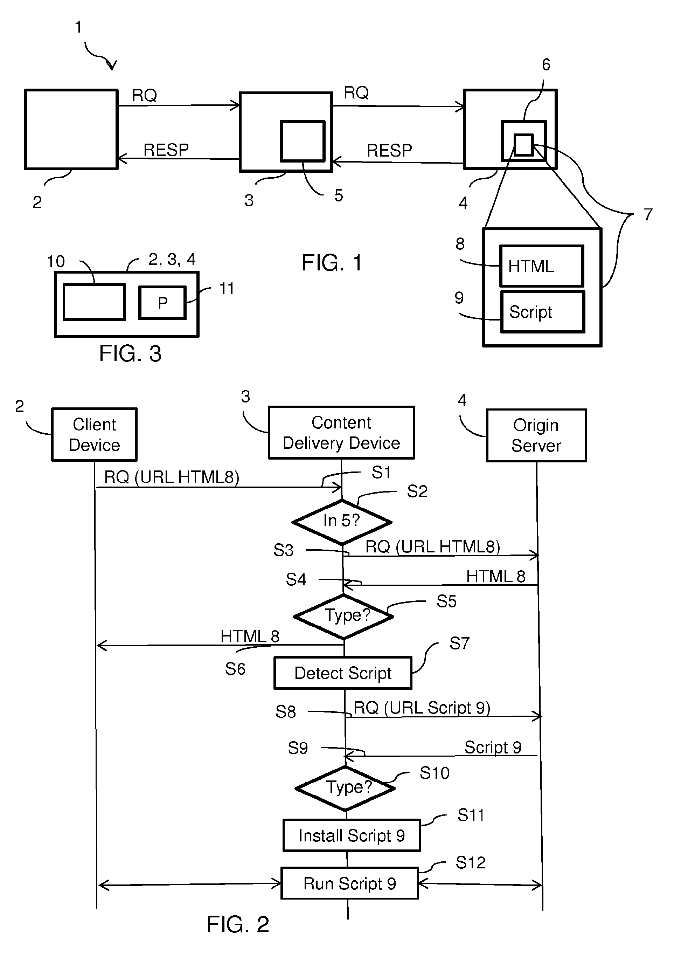

**Figure 1** shows a system 1 for transmission of web content. The system 1 comprises at least one client device 2, at least one content delivery device 3 and at least one origin server 4, only one of each being shown for simplicity. The client devices 2, the content delivery devices 3 and the origin servers 4 are in communication with each other, for example through a network.

A client device 2 consumes web content and interacts with a web application, typically by requesting content, receiving the requested content, displaying the received content...

A content delivery device 3 comprises a local cache 5 and functions as an intermediary node between client devices 2 and origin servers 2. The requests from a client device 2 are redirected to the content delivery device 3. When the content delivery device 3 receives a request from the client device 2, it obtains the requested content from the local cache 5 or from the origin server 4, and sends the obtained content to the client device 2.

The origin server 4 comprises a storage 6 wherein resources 7 associated with at least one web application are stored. The resources 7 include a markup document 8 in a markup language, for example a HTML document, for specifying the structure and data of a web page associated with the web application. The resources 7 also include a script document 9 containing a script, for example instructions in Ecmascript or Javascript, for specifying instructions intended for a content delivery device 3. The resources 7 may also include other HTML documents, CSS documents, other scripts, fonts, Scalable Vector Graphics, images, audio, video... The resources 7 are associated with respective content types, for example respective Internet Media Types (or MIME Types). The content type of the script document 9 allows distinguishing it from the other resources, in particular from other scripts intended for the client device 2. For example, the script document 9 is associated with an Internet Media Type used for identifying a script intended for a content delivery device 3. This may be an existing Internet Media Type or a newly defined Internet Media Type. This content type is called hereafter "CDN Script".

In the system l, the content delivery device 3 is configured for determining the content type of the documents received from the origin server 4 and, in case the content type is a CDN Script, for installing and executing the corresponding script. Moreover, the system 1 is configured such that obtaining a markup document 8 associated with a web application triggers obtaining the corresponding script document 9, if available. Accordingly, when a client device 2 accesses resource 7 of a web application through a content delivery device 3, the script of the script document 9 is automatically installed and executed by the content delivery device 3. This allows the web application developer to control the functioning of a content delivery device 3 simply by including a script document 9 of the appropriate content type in the resources 7 of the web application. It is not necessary to access the content delivery devices 3 through an administration interface for installing and executing the script. Moreover, the script for the content delivery device 3 may be written in a familiar script language such as Ecmascript of Javascript.

Various techniques may be used for triggering the transfer of the script document 9 in response to accessing the markup document 8, and some embodiments are described hereafter.

**Figure 2** is an interaction diagram representing communication in the system 1.

The client device 2 requests access to a web application by sending a request RQ which specifies the URL of the markup document 8 associated with the web application. The request RQ is redirected to and received by the content delivery device 3 (Step S1).

In response to receiving the request RQ, the content delivery device 3 checks whether the requested markup document 8 is stored in the local cache 5 (Step S2). In case the requested markup document 8 is stored in the local cache 5, the content delivery device 3 retrieves the markup document 8 from the local cache 5 and sends it to the client device 2 (not shown). In contrast, in case the requested markup document 8 is not stored in the local cache 5, the content delivery device 3 transfer the request to the origin server 4 (Step S3) and, in response, receives the requested markup document 8 (Step S4).

In reaction to receiving the markup document 8, the content delivery device 3 determines whether the content type of the received document is a CDN Script (Step S5). Here, this is not the case. Accordingly, the content delivery device 3 sends the obtained markup document 8 to the client device 2 (Step S6). The content delivery device 3 may also store the markup document 8 in the local cache 5, according to a caching policy.

Obtaining the markup document 8 at steps S3 and S4 triggers a processing in the system 1 which results in the reception, by the content delivery device 3, of the script document 9 from the origin server 4 (Step S9). In the illustrated example of Figure 2, the markup document 8 includes a reference to the script document 9, for example a tag followed by an URL, and the processing includes scanning the markup document 8 for the reference (Step S7) and, in response to detecting the reference, requesting the script document 9 from the origin server 4 (Step S8). Other embodiments are described hereafter.

In response to receiving the script document 9 at step S9, the content delivery device 3 determines whether the content type of the received document is a CDN Script (Step S10). Here, contrary to step S5, this is the case. Accordingly, the content delivery device 3 installs the script (Step S11) and runs the script (Step S12).

Figure 2 shows a direct communication between the client device 2 and the content delivery device 3, and between the content delivery device 3 and the origin server 4. However, there may be other intermediary nodes, including other content delivery devices 3, between the client device 2 and the content delivery device 3, and/or between the content delivery device 3 and the origin server 4. Thus, for example, receiving the markup document 8 from the origin server 4 at step S4 may include receiving the markup document 8 from another intermediary node.

The content delivery device 3 and the origin server 4 are shown as two distinct functional entities. In practice, they may correspond to two distinct devices in communication through a network, or to the same device wherein the two functional entities communicate locally.

As explained before, obtaining the markup document 8 from the origin server 4 at steps S3 and S4 triggers the reception of the script document 9 at step S9 and subsequent steps S10-S12.

In an embodiment, the markup document 8 comprises a tag which specifies a reference to the script document 9, for example a <script> tag with the URL of the script document 9. When the content delivery device 3 receives the markup document 8 from the origin server 4 (Step S4), it transfers it to the client device 2 (Step S6). Then, the client device 2 receives and processes the markup document 9. Accordingly, the client device 2 requests the script document 9 as instructed by the tag. This request is redirected to the content delivery device 3. Since the script document 9 is not stored in the local cache 5, the content delivery device 3 transfers the request to the origin server 4. The origin server 4 respond by sending the script document 9 to the content delivery device 3 and the process continues with steps S9-S12 as described above.

In another embodiment, the content delivery device 3 is configured for determining the URL of the script document 9 in function of the request RQ and requesting the script document 9 based on the determined URL. The content delivery device 3 may determine the URL of the script document 9 for example in response to receiving the request RQ at step S1 or to receiving the markup document 8 at step S4. For example, the content delivery device 3 may assume that any markup document 8 "index.html" is associated with a corresponding script document 9 "CDS.js".

In another embodiment, when it transfers the request RQ to the origin server 4 (Step S3), the content delivery device 3 modifies the HTTP header to include information specifying that it can process scripts for content delivery devices. The origin server 4 includes, in the HTTP header of the response of step S4, information referring to the script document 9. This allows the content delivery device 3 to request the script document 9.

In another embodiment, the origin server 4 is configured for pushing the script document 9 to the content delivery device 3 in response to a request for the corresponding markup document 8. Accordingly, after transferring the request RQ at step S3, the content delivery device 3 receives both the markup document 8 and the script document 9.

In another embodiment, the origin server 4 is configured for sending the script document 9 to the content delivery device 3 in a multipart message with the markup document 8, in response to a request for the markup document 8. Accordingly, after transferring the request RQ at step S3, the content delivery device 3 receives both the markup document 8 and the script document 9.

Communication between the content delivery device 3 may use HTTP or another communication protocol such as WebSockets.

Installing the script (Step S11) may comprises providing an isolated execution environment in the content delivery device 3, which includes quota for computing power, memory space, storage space and other resources. For example, the execution environment may be a headless user agent such as "Node.js". A Service Level Agreement may specify the level of resources (computing power, memory...) provided for running the CDN script.

In case a plurality of content delivery devices 3 constitute a content delivery network between the origin server 4 and the client device 2, a policy may specify which of the content delivery devices 3 should install and run the CDN script. For example, between steps S10 and S11, a content delivery device 3 determines, in function of the policy and the script document 9, whether it should install and run the CDN script.

In the step S12 of running the script, interaction between the script and the content delivery device 3 outside the isolated execution environment, such as capturing events from or transmitting commands to the content delivery device 3, may be based on a Document Object Model representing the content delivery device 3. This allows the web application developer to use a familiar development environment for developing the CDN script.

The CDN script allows the application developer to acquire fine-grained application-specific control over various aspects of the content delivery device 3, like caching, storing, prefetching, pushing, prioritization, filtering, optimization, adaptation, notification, pattern matching, prediction, reasoning, encryption, Responsive Web Design, streaming, monetization... Such fine-grained control can be used to modify any kind of web resource for the client device 2.

In a more specific example, running the script may comprise one or more of the following:
- Prefetching resources and storing them in the local cache 5. This may include creating one or more application-specific caches in the local cache 5, prefetching resources from the origin server 7, and storing them in the application specific caches.
- Pushing resources to the client device 3. For example, many Web applications exist that have clear paths (phases) within the application, like courses and games. The Web application developer has perfect knowledge over the next possible steps in the Web application. The script may comprise code that has this Web application specific knowledge available. Accordingly, the content delivery device 3 running the script provided by the Web application developer can prefetch and/or push the required next resources ahead of time from the origin server to the user agent. The immediate availability of these Web resources will give the user the impression that the Web application is installed locally on the client device 3.
- Storing user and/or application data in a local database.
- Modifying a web resource in function of user data or device characteristics. For example, encrypting a web resource with the key of a user. The key may be stored in a local database.
- Prefetching various set of resources associated with respective user or device characteristics. For example, sets of resources associated with respective Device Pixel Resolutions. Then, upon reception of a request from a client device 2, obtaining the requested resource from the set associated with the characteristics of the requesting user or client device 2. This may also comprises pushing other resources from the said set to the client device 2. By prefetching and/or pushing resources depending on device characteristics, the content delivery device 3 contributes to accelerations techniques such as "Responsive Web Design" or "Above The Fold".

Other parameters that the CDN script can use to prefetch, push, filter, and/or modify one or more Web resources are e. g. device width, color depth, device type, (supported) input devices, supported user agent features, Operating System (OS), supported image/audio/video formats, user configuration, CDS and/or user location, time-of-day, (user) history information, user age, connection type, encryption keys, and internal Web application logic.

The CDN script may run on a user-basis or an application-basis. Accordingly, for example, the CDN script associated with one web application may control the caching behavior of the content delivery device 3 with respect to the resource of this web application, while a default caching behavior of the content delivery device 3 is applied to other web applications. More than one CDN scripts associated with respective web applications may be installed and executed on the content delivery device 3.

In some embodiments, the origin server 4 may store resources 7 for a plurality of web application, with respective script documents 9 associated with respective web application, and a global script document associated with more than one web applications. The global script document, when installed and executed on the content delivery device 3, may for example be responsible of managing advertisement. This show than more than one scripts can be executed in parallel by the content delivery device 3 for one web application.

The content delivery device 3 may run the CDN script until a stop condition is met. Examples of stop condition include:
- A Time To Live (TTL) expires.
- A Time To Live of the markup document 8 associated with the script document 9 expires.
- All connections from client devices 3 connected to the web application are closed.
- Detection of an event such as a timer, an event in a script running in the client device 3 or the origin server 4.

When the CDN script is stopped at the end of step S12, the resources stored in the application-specific cache may be either deleted, transferred to the global cache or left in the application-specific cache until they expire.

**Figure 3** is a structural view of a communication device, which may be the client device 2, the content delivery device 3 or the origin server 4. The communication device comprises a processor 10 and a memory 11. The memory 11 stores a computer program P which, when executed by the processor 10, cause the communication device to execute the method described above with reference to Figure 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of web content between at least one client device (2) and at least one origin server (4), executed by a content delivery device (3) configured for:
- receiving, from the at least one client device, requests for content available at said at least one origin server,
- obtaining the requested content from a local cache (5) or from the at least one origin server, and
- sending the obtained content to the at least one client device,
wherein the method comprises:
- receiving (S1), from a first client device (2), a request (RQ) for a markup document (8) in a markup language, wherein said markup document is not stored in said local cache (5),
- obtaining (S3, S4) said markup document (8) from a first origin server (4), and
- sending (S6) the obtained markup document (8) to the first client device (2), wherein obtaining said markup document (8) triggers:
- obtaining (S7, S8, S9) a script document (9) containing a script, wherein the script comprises instructions in a scripting language, said script document having a first content type,
- determining (S10) the content type of the received second document, and
- in response to the determination that the content type of the script document (9) is said first content type, installing (S11) and running (S12) said script.

2. Method according to claim 1, wherein the scripting language is Ecmascript or Javascript.

3. Method according to one of claims 1 and 2, comprising, after obtaining the markup document (8):
- scanning (S7) the markup document (8) for a reference to the script document (9), and
- in response to detecting said reference, sending (S8), to the origin server (4), a request for the script document (9).

4. Method according to one of claims 1 and 2, comprising:
- determining an URL of the script document (9) in function of the request for the markup document (8), and
- requesting the script document (9) based on the determined URL.

5. Method according to one of claims 1 and 2, comprising:
- determining an URL of the script document (9) in function of data comprised in an HTTP header of a response from the origin server (4), and
- requesting the script document based on the determined URL.

6. Method according to one of claims 1 to 5, wherein installing (S11) the script comprises providing an isolated execution environment and a Document Object Model allowing interaction with the content delivery device (3).

7. Method according to one of claims 1 to 6, wherein running (S12) the script comprises prefetching content from the origin server and storing the prefetched content in the local cache (5).

8. Method according to one of claims 1 to 7, wherein running the script comprises pushing content to the client device (2).

9. Method according to one of claims 1 to 8, wherein running the script comprises modifying content in function of user data or client device characteristics.

10. Method according to one of claims 1 to 9, wherein running the script comprises storing user data and/or application data in a local database.

11. Method according to one of claims 1 to 10, wherein running the script comprises selecting content to transfer to the client device (2) in function of user data and/or client device characteristics.

12. Computer program (P) comprising instructions for performing the method of one of claims 1 to 11 when said instructions are executed by a computer.

13. Content delivery device (3) for transmission of web content between at least one client device (2) and at least one origin server (4), configured for:
- receiving, from the at least one client device, requests for content available at said at least one origin server,
- obtaining the requested content from a local cache or from the at least one origin server, and
- sending the obtained content to the at least one client device,
wherein the content delivery device comprises:
- means (10, 11) for receiving, from a first client device, a request for a markup document in a markup language, wherein said first document is not stored in said local cache,
- means (10, 11) for obtaining said markup document from a first origin server,
- means (10, 11) for sending the obtained markup document to the first client device,
- means (10, 11) for obtaining a script document containing a script, wherein the script comprises instructions in a scripting language, said script document having a first content type,
- means (10, 11) for determining the content type of the received script document, and
- means (10, 11) for installing and running said script, in response to the determination that the content type of the script document is said first content type.

14. System (1) comprising at least one client device (2), at least one content delivery device (3) according to claim 13 and at least one origin server (4), wherein the origin server (4) stores a script document (9) having said first content type.
